# FASCICULE DE BREVET EUROPEEN

(11) **EP 3 609 726 B1**
(45) Date de publication et mention de la délivrance du brevet: **15.09.2021**
(21) Numéro de dépôt: 18720767.5
(22) Date de dépôt: 12.04.2018
(51) Int. Cl.: B60H 1/00, F02M 35/10, F02D 41/00, B60H 1/24, B60H 3/06

(54) **SYSTÈME DE PRESSURISATION DE LA CABINE D'UN ENGIN TRAVAILLANT DANS UN AIR CHARGÉ DE PARTICULES**
SYSTEM ZUR DRUCKBEAUFSCHLAGUNG DER KABINE EINES FAHRZEUGS, DAS IN PARTIKELBELADENER LUFT BETRIEBEN WIRD
SYSTEM FOR PRESSURISING THE CABIN OF A VEHICLE OPERATING IN PARTICLE-LADEN AIR

(30) Priorité: 14.04.2017 FR 1753301
(43) Date de publication de la demande: 19.02.2020
(73) Titulaire: Eliatis, 38430 Moirans (FR)
(72) Inventeur: PERRIN, Jean-Luc, 38340 Voreppe (FR)
(74) Mandataire: LLR
(86) Numéro de dépôt international: PCT/FR2018/050916
(87) Numéro de publication internationale: WO 2018/189487

(56) Documents cités:
- KR-A- 20030 027 265
- US-A1- 2005 035 209
- US-A1- 2005 121 006

## Description

La présente invention concerne un système de pressurisation de la cabine d'un engin travaillant dans un air chargé de particules.

Certains engins travaillent dans un milieu chargé, ou fortement chargé, de particules, notamment les engins opérant un débroussaillage forestier ; en effet, l'outil de débroussaillage génère une quantité considérable de particules végétales, auxquelles s'ajoutent des particules de poussière de terre lorsque l'outil de débroussaillage travaille près du sol. D'autres engins travaillent dans de tels milieux, par exemple dans le domaine des mines, des carrières ou des travaux publics.

Le conducteur de l'engin doit bien entendu être protégé de ces particules, et un tel engin est équipé d'une cabine pressurisée dans laquelle ce conducteur prend place, la pressurisation, de l'ordre de vingtaine de Pascals, étant suffisante pour prévenir l'introduction des particules et autres poussières dans la cabine.

Sur les engins existants, le système de pressurisation de la cabine est un ensemble indépendant comprenant une prise d'air extérieur à la cabine, un cyclone centrifuge opérant une première élimination des particules, un filtre opérant une deuxième élimination des particules et une turbine d'alimentation de la cabine en air sous pression.

Cette solution a pour inconvénient de faire exister sur la machine un filtre dédié, qui doit être périodiquement nettoyé et remplacé, ce qui constitue une contrainte d'utilisation notable.

La présente invention a pour objectif de remédier à cet inconvénient pratique essentiel, sans affecter le degré de pressurisation de la cabine.

Les publications de demandes de brevet N° US 2005/121006 A1, KR 2003 0027265 A et US 2005/035209 A1 décrivent des systèmes existants, qui ne permettent pas d'atteindre cet objectif.

Le système concerné comprend, de manière connue en soi, une prise d'air extérieur, un filtre à air de moteur et une turbine d'alimentation de la cabine en air sous pression.

Selon l'invention,
- la prise d'air est celle permettant d'alimenter le moteur de l'engin en air ;
- le système comprend une conduite de prise d'air reliée directement à la conduite d'acheminement d'air s'étendant entre le filtre à air du moteur de l'engin et le moteur ou le turbocompresseur dont est équipé ce moteur ; et
- la turbine est une turbine multi-étages apte à générer une dépression supérieure à la valeur de dépression maximale susceptible d'exister dans ladite conduite d'acheminement d'air en fonction de l'état d'encrassement du filtre à air du moteur, du régime de ce moteur et de la charge subie par ce moteur.

L'inventeur a en effet conçu l'intérêt qu'il pouvait y avoir à prélever l'air d'alimentation de la cabine au niveau de la conduite d'acheminement d'air reliant le filtre à air du moteur au turbocompresseur dont est équipé ce moteur, puisque cela permettait de profiter de ce filtre à air et rendait inutile de prévoir un filtre à air dédié pour le système de pressurisation de l'air de la cabine, et donc permettait de s'affranchir d'avoir à entretenir ce filtre ; un autre intérêt de cette conception est de bénéficier en supplément du système multi-cyclone centrifuge agissant en amont de ce filtre à air afin d'opérer une première purification de l'air capté par la prise d'air du moteur. L'inventeur s'est alors aperçu de l'existence de la difficulté à mettre un tel système en œuvre, résultant de la forte variation de la dépression existant dans ladite conduite d'acheminement d'air en fonction de l'état d'encrassement du filtre à air du moteur, des variations du régime de ce moteur et de la charge à laquelle ce moteur est soumis. L'inventeur a alors conçu qu'il fallait utiliser une turbine multi-étages pour alimenter la cabine en air, apte à générer une dépression toujours supérieure à ladite valeur de dépression maximale susceptible de régner dans ladite conduite d'acheminement d'air en fonction des conditions d'utilisation de l'engin mentionnées ci-dessus.

L'inventeur a pu déterminer ladite valeur de dépression maximale comme étant de l'ordre d'environ 600 mm de colonne d'eau, et qu'il fallait par conséquent, pour pressuriser la cabine de manière adéquate, que la turbine soit apte à générer une dépression d'air supérieure à 600 mm de colonne d'eau. En pratique, il faut que cette turbine soit apte à générer une dépression comprise entre 650 mm de colonne d'eau et environ 1100 à 1200 mm de colonne d'eau.

La turbine utilisée conformément à l'invention est notamment celle vendue par la société américaine AMETEK (à Kent, dans l'Ohio), sous la référence 116157-29.

Selon une forme de réalisation simple de l'invention, la turbine est d'un type de turbine tournant à une vitesse fixe, par exemple 1500 tours/minute, au cours de son utilisation.

L'inventeur a pu déterminer que la pression dans la cabine variait en fait très peu malgré la forte variation de la dépression dans ladite conduite d'acheminement d'air, ce qui rendait possible l'utilisation d'une turbine d'un tel type.

Selon une forme de réalisation évoluée de l'invention, la turbine est d'un type de turbine tournant à une vitesse variable au cours de son utilisation, et le système comprend :
- un capteur de pression différentiel présent dans la cabine ; et
- un calculateur relié à ce capteur d'une part et à la turbine d'autre part, agissant sur le régime de rotation de la turbine en fonction de la pression détectée dans la cabine, ce régime étant augmenté en cas de détection par le capteur d'une chute de pression dans la cabine par rapport à la valeur établie par le capteur et enregistrée en tant que valeur de consigne dans le calculateur, et étant réduit en cas de détection par le capteur d'une augmentation de cette pression dans la cabine par rapport à cette même valeur de consigne.

Par capteur de pression différentiel, on entend un capteur incluant deux sondes de détection de pression, l'une présente dans la cabine de l'engin et l'autre présente à l'extérieur de cette cabine ; cette sonde extérieure permet de capter la pression atmosphérique ambiante et d'indiquer la différence entre cette valeur de pression atmosphérique et la valeur de pression actuelle dans la cabine de l'engin. Ce type de capteur permet de tenir compte de la variation de la pression atmosphérique ; le calculateur, à qui ladite différence est transmise, tient compte de cette différence pour adapter la pressurisation de la cabine de façon qu'elle soit efficace quel que soit la pression atmosphérique. Un tel capteur de pression différentiel présente l'avantage de ne pas avoir besoin d'être étalonné, donc de permettre d'adapter en fonction de cette pression atmosphérique la valeur de surpression devant exister dans la cabine ; cette valeur de surpression peut notamment être égale à la pression atmosphérique augmentée de 20 à 35 Pa.

Dans une autre forme de réalisation évoluée, la turbine est également d'un type de turbine tournant à une vitesse variable au cours de son utilisation, et le système comprend :
- un capteur de pression présent dans ladite conduite d'acheminement d'air ; et
- un calculateur relié à ce capteur d'une part et à la turbine d'autre part, agissant sur le régime de rotation de la turbine en fonction de la pression détectée par le capteur dans la conduite d'acheminement d'air, ce régime étant augmenté en cas de détection par le capteur d'une chute de pression dans cette conduite par rapport à la valeur de consigne enregistrée dans le calculateur, et étant réduit en cas de détection par le capteur d'une augmentation de cette pression dans la conduite par rapport à cette même valeur de consigne.

De préférence, le système de pressurisation inclut un détecteur détectant l'atteinte de ladite valeur maximale de dépression dans ladite conduite d'acheminement d'air, et déclenchant une alarme en cas d'atteinte de cette valeur.

Le conducteur de l'engin est ainsi alerté de l'atteinte de ladite valeur, laquelle correspond à une limite supérieure d'encrassement acceptable du filtre à air de l'engin.

Dans le cas des formes de réalisation évoluées précitées, et lorsque le système inclut ce détecteur de seuil maximal de dépression dans ladite conduite d'acheminement d'air, le système inclut un clapet anti-retour présent entre ladite conduite d'acheminement d'air et la turbine, se fermant lorsque le circuit d'air ne se fait pas dans le sens filtre/ cabine. Il permet de prévenir le risque que la cabine soit en dépression si le filtre à air est encrassé, et également celui de polluer, et donc de détériorer, le moteur thermique en aspirant de l'air de la cabine non filtré.

Dans l'une ou l'autre des formes de réalisation simple et évoluées précitées, le système selon l'invention peut comprendre un capteur d'ouverture ou de fermeture de la porte de la cabine, relié au calculateur, permettant que l'activation de la turbine puisse être commandée seulement si cette porte est fermée.

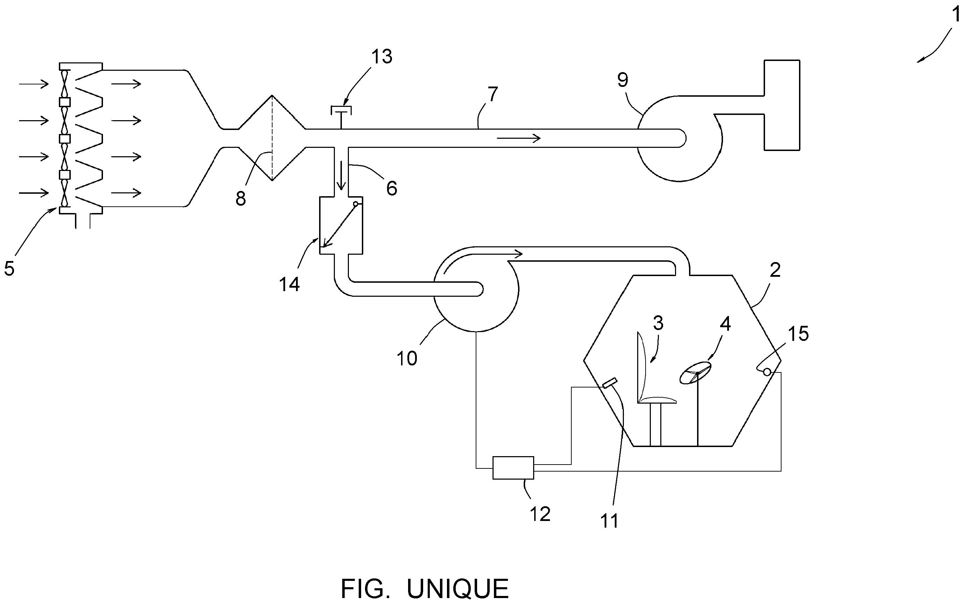

L'invention sera bien comprise, et d'autres caractéristiques et avantages de celle-ci apparaîtront, en référence au dessin annexé, représentant, à titre d'exemple non limitatif, une forme de réalisation du système qu'elle concerne.

La figure unique est une vue très schématique et simplifiée de ce système, qui est un système 1 de pressurisation de la cabine 2 d'un engin travaillant dans un air chargé de particules, cette cabine 2 contenant un siège 3 et des organes 4 de direction de l'engin.

Le système 1 comprend :
- une prise d'air extérieur 5, qui est celle permettant d'alimenter le moteur de l'engin en air ;
- une conduite 6 de prise d'air reliée directement à la conduite 7 d'acheminement d'air s'étendant entre le filtre à air 8 du moteur de l'engin et le turbocompresseur 9 dont est équipé ce moteur ; et
- une turbine multi-étages 10 à vitesse de rotation variable, apte à générer une dépression comprise entre 650 mm de colonne d'eau et environ 1100 à 1200 mm de colonne d'eau ; cette turbine est notamment celle vendue par la société américaine AMETEK (à Kent, dans l'Ohio), sous la référence 116157-29 ;
- un capteur de pression différentiel 11 présent dans la cabine 2 ;
- un calculateur 12 relié à ce capteur 11 d'une part et à la turbine 10 d'autre part ;
- un détecteur 13, détectant l'atteinte d'une valeur maximale de dépression dans la conduite 7 d'acheminement d'air, et déclenchant une alarme (non représentée, présente dans la cabine 2) en cas d'atteinte de cette valeur ;
- un clapet anti-retour 14 présent entre ladite conduite d'acheminement d'air 7 et la turbine 10 se fermant de façon à interdire l'inversion du flux d'air ; et
- un capteur 15 d'ouverture ou de fermeture de la porte de la cabine 2, relié au calculateur 12, permettant que l'activation de la turbine 10 puisse être commandée seulement si cette porte est fermée.

En pratique, la turbine 10 achemine à la cabine 2 l'air capté dans la conduite 7, sous une pression permettant de mettre cette cabine en surpression, à un niveau de l'ordre de 20 à 35 Pascals au-delà de la pression atmosphérique. Le capteur de pression différentiel 11 inclut deux sondes de détection de pression, l'une présente dans la cabine 2 et l'autre présente à l'extérieur de cette cabine ; cette sonde extérieure permet de détecter la pression atmosphérique ambiante et donc d'adapter en fonction de cette pression atmosphérique la valeur de surpression devant exister dans la cabine 2. Cette valeur de surpression est transmise au calculateur 12, qui agit sur le régime de rotation de la turbine 10 en fonction de la pression détectée dans la cabine 2, ce régime étant augmenté en cas de détection d'une chute de pression dans la cabine par rapport à la valeur de pression établie au moyen du capteur 11 et enregistrée en tant que valeur de consigne dans le calculateur 12, et étant réduit en cas de détection d'une augmentation de cette pression dans la cabine 2 par rapport à cette même valeur de consigne.

La valeur de dépression maximale susceptible d'exister dans la conduite 7 d'acheminement d'air est en fonction de l'état d'encrassement du filtre à air 8, du régime actuel du moteur et de la charge actuelle à laquelle est soumis ce moteur ; l'atteinte de cette valeur est détectée par le capteur 13, qui déclenche l'alerte au conducteur, et ferme le clapet 14 ; cette fermeture permet d'éliminer tout risque de mise en dépression de la cabine 2 au travers de la turbine 10 le temps que cette turbine soit déclenchée de façon à remettre la cabine 2 en surpression.

L'invention fournit ainsi un système de pressurisation de la cabine d'un engin travaillant dans un air chargé de particules permettait de profiter du filtre à air du moteur et rendre inutile de prévoir un filtre à air dédié pour le système de pressurisation de l'air de la cabine, et donc de permettre de s'affranchir d'avoir à entretenir ce filtre.

L'invention a été décrite ci-dessus en référence à une forme de réalisation fournie à titre d'exemple ; il va de soi que l'invention n'est pas limitée à cette forme de réalisation mais qu'elle s'étend à toutes les formes de réalisation couvertes par les revendications annexées.

## Revendications

1. Système (1) de pressurisation de la cabine (2) d'un engin travaillant dans un air chargé de particules, comprenant une prise d'air (5) extérieur à la cabine (2) et permettant d'alimenter le moteur de l'engin en air, un filtre à air (8) de moteur et une turbine (10) d'alimentation de la cabine (2) en air sous pression,
- le système (1) comprend une conduite de prise d'air (6) reliée directement à la conduite d'acheminement d'air (7) s'étendant entre le filtre à air (8) du moteur de l'engin et le moteur ou le turbocompresseur (9) dont est équipé ce moteur ;
et **caractérisé en ce que** :
- la turbine (10) est une turbine multi-étages apte à générer une dépression supérieure à la valeur de dépression maximale susceptible d'exister dans ladite conduite d'acheminement d'air (7) en fonction de l'état d'encrassement du filtre à air (8) du moteur, du régime de ce moteur et de la charge subie par ce moteur.

2. Système (1) de pressurisation selon la revendication 1, **caractérisé en ce que** ladite valeur de dépression maximale est de l'ordre d'environ 600 mm de colonne d'eau et **en ce que** la turbine (10) est apte à générer une dépression d'air supérieure 600 mm de colonne d'eau.

3. Système (1) de pressurisation selon la revendication 2, **caractérisé en ce que** la turbine (10) est apte à générer une dépression d'air comprise entre 650 mm de colonne d'eau et environ 1100 à 1200 mm de colonne d'eau.

4. Système (1) de pressurisation selon la revendication 3, **caractérisé en ce que** la turbine (10) est celle vendue par la société américaine AMETEK sous la référence 116157-29.

5. Système (1) de pressurisation selon l'une des revendications 1 à 4, **caractérisé en ce que** la turbine (10) est d'un type de turbine tournant à une vitesse fixe, par exemple 1500 tours/minute, au cours de son utilisation.

6. Système (1) de pressurisation selon l'une des revendications 1 à 4, **caractérisé en ce que** la turbine (10) est d'un type de turbine tournant à une vitesse variable au cours de son utilisation, et **en ce que** le système (1) comprend :
- un capteur de pression différentiel (11) présent dans la cabine (2) ; et
- un calculateur (12) relié à ce capteur (11) d'une part et à la turbine (10) d'autre part, agissant sur le régime de rotation de la turbine (10) en fonction de la pression détectée par le capteur (11) dans la cabine (2), ce régime étant augmenté en cas de détection par le capteur (11) d'une chute de pression dans la cabine (2) par rapport à la valeur établie par le capteur (11) et enregistrée en tant que valeur de consigne dans le calculateur (12), et étant réduit en cas de détection par le capteur d'une augmentation de cette pression dans la cabine (2) par rapport à cette même valeur de consigne.

7. Système (1) de pressurisation selon l'une des revendications 1 à 4, **caractérisé en ce que** la turbine (10) est d'un type de turbine tournant à une vitesse variable au cours de son utilisation, et **en ce que** le système (1) comprend :
- un capteur de pression présent dans ladite conduite d'acheminement d'air (7) ; et
- un calculateur (12) relié à ce capteur d'une part et à la turbine (10) d'autre part, agissant sur le régime de rotation de la turbine (10) en fonction de la pression détectée par le capteur dans la conduite d'acheminement d'air (7), ce régime étant augmenté en cas de détection par le capteur d'une chute de pression dans cette conduite par rapport à la valeur de consigne enregistrée dans le calculateur (12), et étant réduit en cas de détection par le capteur d'une augmentation de cette pression dans la conduite par rapport à cette même valeur de consigne.

8. Système (1) de pressurisation selon l'une des revendications 1 à 7, **caractérisé en ce qu'**il inclut un détecteur (13) détectant l'atteinte de ladite valeur maximale de dépression dans ladite conduite d'acheminement d'air (7), et déclenchant une alarme en cas d'atteinte de cette valeur.

9. Système (1) de pressurisation selon l'une des revendications 6 ou 7 et selon la revendication 8, **caractérisé en ce qu'**il inclut un clapet anti-retour (14) présent entre ladite conduite d'acheminement d'air (7) et la turbine (10), taré de façon à se fermer lors de l'atteinte de ladite valeur maximale de dépression dans cette conduite.

10. Système (1) de pressurisation selon l'une des revendications 1 à 9, **caractérisé en ce qu'**il comprend un capteur d'ouverture ou de fermeture (15) de la porte de la cabine (2), relié au calculateur (12), permettant que l'activation de la turbine (10) puisse être commandée seulement si cette porte est fermée.

## Patentansprüche

1. System (1) zur Druckbeaufschlagung der Kabine (2) eines Fahrzeugs, das in einer partikelbeladenen Luft betrieben wird, umfassend einen Lufteinlass (5), der sich außerhalb der Kabine (2) befindet und die Versorgung des Motors des Fahrzeugs mit Luft gestattet, einen Motorluftfilter (8) und eine Turbine (10) für die Versorgung der Kabine (2) mit Druckluft,
- wobei das System (1) eine Lufteinlassleitung (6) umfasst, die unmittelbar mit der Luftzuführungsleitung (7), die sich zwischen dem Luftfilter (8) des Motors des Fahrzeugs und dem Motor oder dem Turbokompressor (9), mit dem dieser Motor versehen ist, erstreckt, verbunden ist;
und **dadurch gekennzeichnet, dass**:
- die Turbine (10) eine mehrstufige Turbine ist, die imstande ist, einen Unterdruck zu erzeugen, der größer ist als der maximale Unterdruckwert, der in der Luftzuführungsleitung (7) vorhanden sein kann, in Abhängigkeit von dem Verschmutzungszustand des Luftfilters (8) des Motors, von der Drehzahl dieses Motors und von der von diesem Motor erfahrenen Last.

2. System (1) zur Druckbeaufschlagung nach Anspruch 1, **dadurch gekennzeichnet, dass** der maximale Unterdruckwert in der Größenordnung von etwa 600 mm Wassersäule liegt und dass die Turbine (10) imstande ist, einen Luftunterdruck zu erzeugen, der größer ist als 600 mm Wassersäule.

3. System (1) zur Druckbeaufschlagung nach Anspruch 1, **dadurch gekennzeichnet, dass** die Turbine (10) imstande ist, einen Luftunterdruck zu erzeugen, der zwischen 650 mm Wassersäule und etwa 1.100 bis 1.200 mm Wassersäule liegt.

4. System (1) zur Druckbeaufschlagung nach Anspruch 1, **dadurch gekennzeichnet, dass** die Turbine (10) diejenige ist, die von der amerikanischen Gesellschaft AMETEK unter der Artikelnummer 116157-29 vertrieben wird.

5. System (1) zur Druckbeaufschlagung nach einem der Ansprüche 1 bis 4, **dadurch gekennzeichnet, dass** die Turbine (10) eines Turbinentyps ist, der sich während seiner Verwendung mit einer feststehenden Geschwindigkeit, zum Beispiel 1.500 Umdrehungen/Minute, dreht.

6. System (1) zur Druckbeaufschlagung nach einem der Ansprüche 1 bis 4, **dadurch gekennzeichnet, dass** die Turbine (10) eines Turbinentyps ist, der sich während seiner Verwendung mit einer variablen Geschwindigkeit dreht, und dass das System (1) umfasst:
- einen Differenzialdruck-Sensor (11), der in der Kabine (2) vorhanden ist; und
- einen Rechner (12), der mit dem Sensor (11) einerseits und mit der Turbine (10) andererseits verbunden ist und auf die Drehzahl der Turbine (10) in Abhängigkeit von dem Druck einwirkt, der von dem Sensor (11) in der Kabine (2) detektiert wird, wobei diese Drehzahl erhöht wird für den Fall, dass von dem Sensor (11) ein Druckabfall in der Kabine (2) gegenüber dem Wert detektiert wird, der von dem Sensor (11) festgelegt und als Sollwert in dem Rechner (12) hinterlegt ist, und verringert wird für den Fall, dass von dem Sensor eine Zunahme dieses Drucks in der Kabine (2) gegenüber diesem gleichen Sollwert detektiert wird.

7. System (1) zur Druckbeaufschlagung nach einem der Ansprüche 1 bis 4, **dadurch gekennzeichnet, dass** die Turbine (10) eines Turbinentyps ist, der sich während seiner Verwendung mit einer variablen Geschwindigkeit dreht, und dass das System (1) umfasst:
- einen Drucksensor, der in der Luftzuführungsleitung (7) vorhanden ist; und
- einen Rechner (12), der mit dem Sensor einerseits und mit der Turbine (10) andererseits verbunden ist und auf die Drehzahl der Turbine (10) in Abhängigkeit von dem Druck einwirkt, der von dem Sensor in der Luftzuführungsleitung (7) detektiert wird, wobei diese Drehzahl erhöht wird für den Fall, dass von dem Sensor ein Druckabfall in dieser Leitung gegenüber dem Sollwert detektiert wird, der in dem Rechner (12) gespeichert ist, und für den Fall verringert wird für den Fall, dass von dem Sensor eine Zunahme dieses Drucks in der Leitung gegenüber diesem gleichen Sollwert detektiert wird.

8. System (1) zur Druckbeaufschlagung nach einem der Ansprüche 1 bis 7, **dadurch gekennzeichnet, dass** es einen Detektor (13) aufweist, der das Erreichen des maximalen Unterdruckwertes in der Luftzuführungsleitung (7) detektiert und für den Fall des Erreichens dieses Wertes einen Alarm auslöst.

9. System (1) zur Druckbeaufschlagung nach einem der Ansprüche 6 oder 8, **dadurch gekennzeichnet, dass** es ein Rückschlagventil (14) aufweist, das zwischen der Luftzuführungsleitung (7) und der Turbine (10) vorhanden ist und so kalibriert ist, das es sich bei Erreichen des maximalen Unterdruckwertes in dieser Leitung schließt.

10. System (1) zur Druckbeaufschlagung nach einem der Ansprüche 1 bis 9, **dadurch gekennzeichnet, dass** es einen Sensor für das Öffnen oder das Schließen (15) der Tür der Kabine (2) umfasst, der mit dem Rechner (12) verbunden ist und gestattet, dass die Aktivierung der Turbine (10) nur gesteuert werden kann, wenn diese Tür geschlossen ist.

## Claims

1. System (1) for pressurizing the cabin (2) of a vehicle operating in particleladen air, comprising an air intake (5) outside the cabin (2) and used to supply the engine of the vehicle with air, an air filter of the engine (8) and a turbine (10) for supplying pressurized air to the cabin (2),
- the system (1) comprises an air intake duct (6) connected directly to the air delivery duct (7) extending between the air filter (8) of the engine of the vehicle and the engine or turbo compressor (9) with which the engine is equipped; and **characterized in that**:
- the turbine (10) is a multi-stage turbine capable of generating a depression greater than the maximum depression value that may exist in said air delivery duct (7) depending on the state of clogging of the air filter of the engine (8), the speed of this engine and the load on this engine.

2. Pressurization system (1) according to claim 1, **characterized in that** said maximum depression value is of the order of about 600 mm water column and **in that** the turbine (10) is capable of generating an air depression of more than 600 mm water column.

3. Pressurization system (1) according to claim 2, **characterized in that** the turbine (10) is capable of generating an air depression between 650 mm of water column and about 1100 to 1200 mm of water column.

4. Pressurization system (1) according to claim 3, **characterized in that** the turbine (10) is the one sold by the US company AMETEK under the reference 116157-29.

5. A pressurization system (1) according to one of claims 1 to 4, **characterized in that** the turbine (10) is of the type rotating at a fixed speed, for example 1500 rpm, during its use.

6. A pressurization system (1) according to one of claims 1 to 4, **characterized in that** the turbine (10) is of a type of turbine rotating at a variable speed during its use, and **in that** the system (1) comprises:
- a differential pressure sensor (11) present in the cabin (2); and
- a computer (12) connected to this sensor (11) on the one hand and to the turbine (10) on the other hand, acting on the rotational speed of the turbine (10) based on the pressure detected by the sensor (11) in the cabin (2), this speed being increased in the event that the sensor (11) detects a pressure drop in the cabin (2) with respect to the value set by the sensor (11) and stored as a set value in the computer (12), and being reduced in the event that the sensor detects an increase in this pressure in the cabin (2) with respect to this same set value.

7. A pressurization system (1) according to one of claims 1 to 4, **characterized in that** the turbine (10) is of a type of turbine rotating at a variable speed during its use, and **in that** the system (1) comprises:
- a pressure sensor present in said air delivery duct (7); and
- a computer (12) connected to this sensor on the one hand and to the turbine (10) on the other hand, acting on the rotational speed of the turbine (10) based on the pressure detected by the sensor in the air delivery duct (7), this speed being increased in the event that the sensor detects a pressure drop in this duct with respect to the set value stored in the computer (12), and being reduced in the event that the sensor detects an increase in this pressure in the duct with respect to the same set value.

8. A pressurization system (1) according to one of claims 1 to 7, **characterized in that** it comprises a sensor (13) detecting when said maximum depression value is reached in said air delivery duct (7), and triggering an alarm if this value is reached.

9. A pressurization system (1) according to one of claims 6 or 7 and claim 8, **characterized in that** it comprises a check valve (14) present between said air delivery duct (7) and the turbine (10), adjusted so as to close when said maximum depression value is reached in this duct.

10. Pressurization system (1) according to one of claims 1 to 9, **characterized in that** it comprises a sensor (15) for sensing the opening or the closing of the door of the cabin (2), connected to the computer (12), allowing the turbine to be activated only if the door is closed.
